# DEMANDE DE BREVET EUROPEEN

(11) **EP 2 091 008 A1**
(43) Date de publication de la demande: **19.08.2009**
(21) Numéro de dépôt: 07858261.6
(22) Date de dépôt: 27.11.2007
(51) Int. Cl.: G06Q 10/00

(54) **SYSTÈME ET PROCÉDÉ DE LOCALISATION SPATIALE SANS FIL POUR LA NUMÉRATION, LA COMMANDE ET LA GESTION À DISTANCE DE L'INVENTAIRE D'OBJETS, AVEC DES FONCTIONNALITÉS SUPPLÉMENTAIRES DE MESSAGERIE, D'IDENTIFICATION ET DE RENUMÉRATION**

(30) Priorité: 01.12.2006 ES 200603080
(71) Demandeur: Bannel Servicing Group, S.L., 20160 Lasarte-Oria (Gipuzkoa) (ES); UNIVERSIDAD DEL PAIS VASCO-EUSKAL HERRIKO UNIBERSITATEA, 48940 Leioa (Vizcaya) (ES); Akaba S.A., 20160 Lasarte (Gipuzkao) (ES)
(72) Inventeur: GUERENDIAIN OLIVER, Alfonso, 20160 Lasarte-Oria (Gipuzkoa) (ES); ARZELUS IGARZABAL, Josu, 20160 Lasarte (Gipuzkao) (ES); ALVAREZ BALBAS, Gonzalo, 20009 Donostia (Gipuzkoa) (ES); AMUCHASTEGUI URIARTE,Carlos, 20010 Donostia (Gipuzkoa) (ES); AYUSO RUBIO, Néstor, 01013 Vitoria (Álava) (ES)
(74) Mandataire: Urizar Barandiaran, Miguel Angel
(86) Numéro de dépôt international: PCT/ES2007/000684
(87) Numéro de publication internationale: WO 2008/068358

(57) **Abrégé**

Système et méthode de localisation spatiale sans fil pour la numération, la commande et la gestion à distance de l'inventaire d'objets, avec des fonctionnalités supplémentaires de messagerie, d'identification et de renumération. Le système comprend, au moins, un élément localisateur ou esclave (1) situé sur l'objet ; un élément contrôleur ou maître (13) qui communique avec l'esclave (1) à travers un premier lien (15); un module mobile ou commande (14) qui communique avec l'esclave (1) à travers un second lien (15) ; et un ensemble de balises (16) qui communiquent avec l'esclave (1) à travers un troisième lien (15). L'élément contrôleur ou maître (13) reçoit le signal de radiofréquence, les ultration ou le rayonnement lumineux de différents localisateurs ou esclaves (1) installés dans les objets et est capable de les situer, de les reconfigurer, des les inventorier et de leur envoyer des messages qui sont affichés sur les displays des esclaves (1).

## Description

### Secteur de la technique

L'invention fait référence à un système de localisation spatiale automatique, de gestion d'emplacement, de numération et d'inventaire d'objets susceptibles de changer d'emplacement, basé sur la radiofréquence et les ultrasons, dans lequel la commande ou l'unité à distance reçoit le signal des différents localisateurs placés dans les objets et est capable de les situer, de les reconfigurer, de les inventorier et de leur envoyer des messages pour que ceux-ci s'affichent sur les displays des unités (localisateurs).

### État de la technique

La tâche d'inventorier et de stocker des objets mobiles dans des zones de taille importante, comme les gares, enceintes, aéroports, musées, etc. suppose un travail difficile et des frais en ressources importants. Étant donné que, par exemple, au moment de préparer de nouvelles conventions ou discours, le mobilier est déplacé d'un endroit à un autre sans aucun contrôle automatisé et sans informations sur leur localisation exacte. Aussi pour la préparation de salles dans lesquelles le mobilier, par exemple les sièges, ne sont plus des éléments fixes, et leur nombre varie en fonction du nombre d'assistants. Dans ces cas, il est donc nécessaire de pouvoir disposer les sièges dans des files, en leur attribuant un nombre et même en les personnalisant de manière à ce que les assistants puissent localiser leur siège facilement. Dans le cas d'un aéroport, les éléments mobiles se multiplient et sont des dispositifs dont la gestion est très variée.

L'apparition de nouvelles technologies de l'information et de la communication a permis que les inventaires, la localisation et la numération de ces éléments puisse se concevoir comme une action réalisée à distance et automatisée, avec une réduction correspondante de perte de matériel, de risque d'erreurs durant le procédé de stockage, et du temps total de gestion des actifs.

Ce système de gestion à distance de dispositifs ou d'éléments a été conçu dans l'objectif de pouvoir s'adapter aux systèmes existants, pour réduire ainsi l'investissement économique nécessaire, en tenant compte des tailles finales et de la durée du dispositif.

Dans cette ligne, nous connaissons le document US 2002-0167500-A1, qui décrit un système et une méthode basée sur des étiquettes électroniques avec un display, basées sur des communications sans fil pour présenter des informations sur ce display. Ce système comprend, d'une part, un dispositif ou module de gestion de communications, en relation avec un élément externe dénommé module externe activateur, lequel remet les informations reçues du précédent au module de gestion de présentation de l'information sur le display.

La conception présentée par US 2002-0167500-A1, partage les aspects
.- De communications par radio, en se basant sur des communications RFID et en utilisant celles-ci pour charger ses batteries ainsi que pour la gestion de l'alimentation du display.
.- De présentation de Données sur un display.

Même si les deux systèmes ont la même base technologique, le but pour lequel ce système a été développé est différent. Étant donné que, d'un côté, le système décrit par US 2002-0167500-A1 n'envisage par la localisation spatiale des module. Dans cette conception, il n'est pas prévu que le fonctionnement de l'esclave décrit ci-dessous, puisse varier ou être actualisé, et, pour cela, nous entendons que le système décrit par US 2002-0167500-A1 présente un mode de fonctionnement unique à partir de la fin de sa fabrication. Pour cela, si durant la durée de vie utile du système de l'invention, le besoin de modifier le fonctionnement du système apparaît pour toute cause, il sera nécessaire de remplacer physiquement le système par un autre système approprié.

D'autre part, pour que ces dispositfs puissent fonctionner sans batterie, ils se servent d'installations câblées et fixent qui sont émettrices près de ceux-ci pour qu'ils puissent charger leurs batteries rechargeables (s'ils en disposent) et ceci toute en utilisant cette pose d'infrastructures pour communiquer avec ces élémtns et actualiser les informations présentées sur les displays, à distance et sans devoir utiliser un dispositif manuel pour interagir une à une.

De plus, le module processeur de US 2002-0167500-A1 se base uniquement sur la présentation d'informations, en n'utilisant pas de capacités wireless pour interagir de manière autonome avec les systèmes centraux pour la réalisation de tâches comme la localisation ou l'emplacement de ces appareils, lesquels, s'ils sont déplacés ou dans d'autres circonstances, peuvent disparaître de la portée des antennes installées.

Un objectif de l'invention consiste en l'obtention d'un système automatique de localisation spatiale, de gestion d'emplacement, de numération et d'inventaire universel et reconfigurable, c'est-à-dire, pouvant s'adapter à tout objet. Dans ce sens, un autre objectif de l'invention consiste en ce que ce système de gestion automatique garantisse la possibilité de changement ou d'actualisation des algorithmes du système, ou en général de l'apparition de toute condition exigeant une modification du fonctionnement du système n'impliquant pas que ce système doive être remplacé ou déplacé, ou que du personnel qualifié doive se déplacer pour réaliser cette modification.

Est autre objectif de l'invention est d'obtenir un système de localisation spatiale et de gestion automatique des objets minimisant les frais et la durée des opérations de stockage, d'emplacement et de positionnement.

### Description détaillée de l'invention

Pour atteindre les objectifs précédent, l'invention définit un système de localisation spatiale sans fil pour la gestion de l'emplacement, de la numération et de l'inventaire d'objets avec des fonctionnalités supplémentaires de messagerie, d'identification et de renumération. En plus, il est caractérisé par la possibilité de le reconfigurer à distance. Ceci en fait un système universel et apte pour tout type de besoins, et adaptable à tout type de variation des conditions de l'installation ou de l'environnement du fonctionnement du système même.

Le système se compose des éléments suivants :
- Esclave ou localisateur. Élément sans fil avec un display intégré.
- Controleur ou maître. Élément sans fil connecté à un ordinateur.
- Commande, un dispositif mobile d'application spécifique et sans fil.
- Balise. Élément sans fil avec des émetteurs d'ultrasons, servant de référence spatiale.

Le système selon l'invention se base sur un modèle maître-esclave, et, pour cela, il comprend un élément esclave, installé dans l'objet ou élément, capable de réaliser différentes tâches en fonction des ordres reçus du maître ou de la commande. Le maître est connecté à un ordinateur ou à un dispositif mobile. Il réalise les tâches de configuration des différents esclaves situés dans son rayon d'action, la communication entre maître et esclave se réalisant sans fil à travers d'une connexion ad-hoc ou d'une connexion privée standard. Cependant, différents modes de réalisation de l'architecture esclave-maître-unité centrale à distance sont envisagés, comme par exemple que l'unité centrale à distance réalise les fonctions de maître et communique avec les esclaves à travers un réseau public de données. Il est aussi envisagé d'utiliser des répéteurs pour multiplier les distances avec lesquelles il sera possible de communiquer avec les dispositifs et centraliser dans un seul ordinateur dans une enceinte de plus de 1 000 m².

L'esclave comprend un module de radiofréquence ou un module de RF pour communiquer avec le maître, d'où les informations requises par le maître sont envoyées ou pour recevoir les ordres et/ou messages du maître. Un module d'alimentation pour l'alimentation de l'esclave. Un module de procédé dont la tâche principale est, entre autres, selon les ordres reçus par le maître, de faire que le système complet modifie son état ou ses modes de fonctionnement. Un module de gestion de visualisation présente les informations, reçues du module de procédé sur un display. Un module de gestion de clavier, qui, en mode dénommé vote, pourra recevoir les pulsations réalisées par l'utilisateur et les envoyer au maître. Un module temporisateur qui, avec le module de contrôle, gère les arrêts périodiques de l'esclave dans le but de réduire la consommation électrique de celui-ci. L'esclave présente un code d'indentification ou ID associé et stocké dans la mémoire rémanente, pour que le maître puisse identifier de manière univoque l'esclave et les données de lecture provenant de celui-ci. De plus, l'esclave peut intégrer un module de réception d'ultrasons ou infrarouges permettant de localiser dans l'espace, selon un calcul de la distance, des balises situées dans la zone de contrôle.

Le module de visualisation comprend, en plus d'un display qui présente les informations, un dispositif d'illumination fournissant l'illumination nécessaire pour que le texte présent puisse être visualisé clairement. L'illumination fournie par le dispositif d'illumination peut être configurée, tant l'illumination comme le display étant contrôlés par le module de visualisation.

Le module de procédé est le module chargé de contrôler tout le fonctionnement de l'esclave. C'est-à-dire, de contrôler le fonctionnement du module de visualisation, du module de radiofréquence, du module de clavier, du module de localisation spatiale et du module d'alimentation. Pour cela, le module de procédé gère aussi une série de paramètres qui configurent le fonctionnement de l'esclave, comme le code d'identificaiton ou ID, les paramètres d'illumination, de création d'ordres internes de changement d'état, du display, de temporisation et du protocole de communications.

D'autre part, le module de procédé gère le protocole de communication de l'esclave avec le maître. Ce protocole est implanté sur un dispositif programmable, qui peut aussi être configuré, en partie ou même dans sa totalité, sa fonctionnalité étant de cette façon remplaçable ou pouvant être mise à jour partiellement ou complètement. Dans tous les cas, le protocole est bi-directionnel dans le but de supporter les méthodes de fonctionnement du système selon l'invention, comme nous le verons ci-après.

Le module de procédé selon l'invention se base sur l'utilisation de dispositifs programmables, et il comprend pour cela une mémoire de configuration rémanente. Dans celle-ci, la configuration complète représentant la fonctionnalité comprise dans le dispositif programmable, entre autres données, est stockée, ainsi que les paramètres configurables qui régissent le fonctionnement de l'esclave.

Une autre prestation est la capacité de l'esclave d'être reconfiguré. Ainsi, même si le dispositif présente une configuration par défaut, cette configuration peut être modifiée totalement ou partiellement à tout moment par le maître (ainsi le prévoit le protocole de communication entre le maître et l'esclave), pour que l'esclave puisse s'adapter à un changement de fonctionnement ou à une autre modification ou mise à jour nécessaire.

### Description des figures

Les détails de l'invention sont visibles sur les figures jointes, celles-ci ne prétendant pas limiter le domaine de l'invention :
La Figure 1 présente un diagramme de blocs d'un système de localisation spatiale sans fil reconfigurable pour la gestion d'emplacement, la numération et l'inventaire d'objets selon l'invention.
La Figure 2 présente un diagramme de blocs de la configuration par défaut du dispositif reconfigurable selon l'invention.
La Figure 3 présente un diagramme de blocs de la méthode C ou méthode de Numération et visualisation sur le display.
La Figure 4 présente un diagramme de blocs de la méthode G ou méthode de communication de données de l'esclave au maître.

### Description d'un mode de réalisation

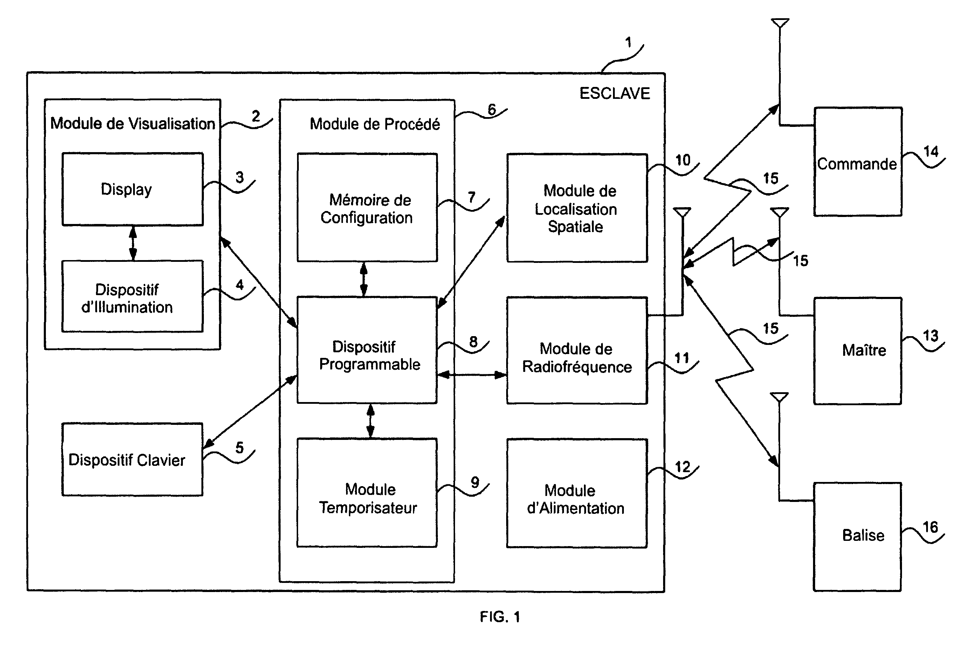

La Figure 1 présente le système (1) universel et reconfigurable de localisation spatiale selon l'invention, lequel comprend un maître (13), une commande mobile (14), une balise (16) et un esclave (1) communiqués par un lien (15), en général sans fil. L'esclave (1) est installé dans un élément générique.

L'esclave (1) comprend un module de visualisation (2) pourvu d'un display (3), ou unité réalisant la présentation des informations sur celui-ci, et d'un dispositif d'illumination (4), ou unité fournissant une illumination réglable ou configurable sur l'indicateur visuel (3) durant la présentation des informations.. L'esclave (1) inclut aussi un module de localisation spatiale (10), un dispositif de clavier (5), un module d'alimentation (12), un module de radiofréquence (11) et un module de procédé (6). Le module de procédé (6) selon l'invention est réalisé par le moyen d'un dispositif reconfigurable (8) dont la configuration est stockée dans la mémoire de configuration (7), laquelle stocke aussi d'autres données comme les paramètres configurables de l'esclave (1), ou des paramètres que le maître (13) peut modifier ou régler, il inclut aussi le module temporisateur (9).

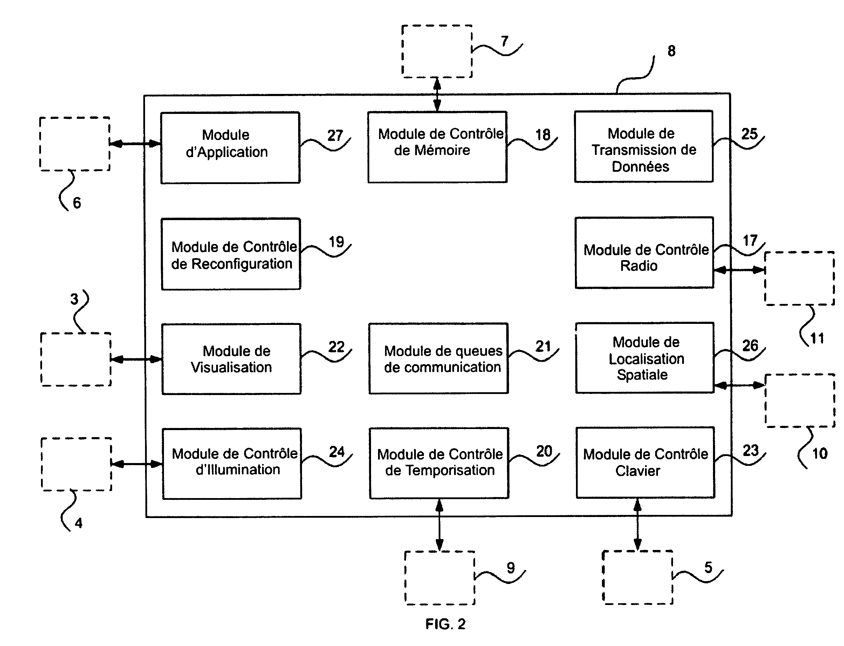

La Figure 2 présente la configuration par défaut du dispositif configurable (8) du module de procédé (6) de l'esclave (1). Dans cette configuration par défaut, modifiable totalement ou partiellement avec la méthode F ou méthode de reconfiguration du système (1), le dispositif configurable (8) comprend les modules suivants : un module d'application (27), chargé de contrôler et de prendre des décisions quant aux tâches de plus haut niveau; un module de contrôle de la reconfiguration (19), qui s'assure de contrôler que la transmission de données de la reconfiguration et la reconfiguration soient correctes ; un module de contrôle de visualisation (22), qui gère les informations et la configuration du dispositif (3); un module de contrôle de l'illumination (24), qui gère les informations du dispositif d'illumination (4); un module de transmission de données (25) et un module de contrôle de radioo (17), qui implantent le protocole bi-directionnel maîtr-esclave et qui gèrent le fonctionnement du module de radiofréquence (11); un module central de clavier (23), qui gère les informations et la configuration du dispositif clavier (5); un module de contrôle de temporisaiton (20), qui gère le fonctionnement du module temporisateur (9) et la temporisation des arrêts et des mises en marches de l'esclave (1); un module de contrôle de mémoire (18), qui gère l'accès à la mémoire de configuration (7); un module de queues de communication (21), comprenant les queues pour la transmission de données dans l'esclave (1), et un module de contrôle de localisation spatiale (26), qui gère les informations et la configuration du dispositif (10).

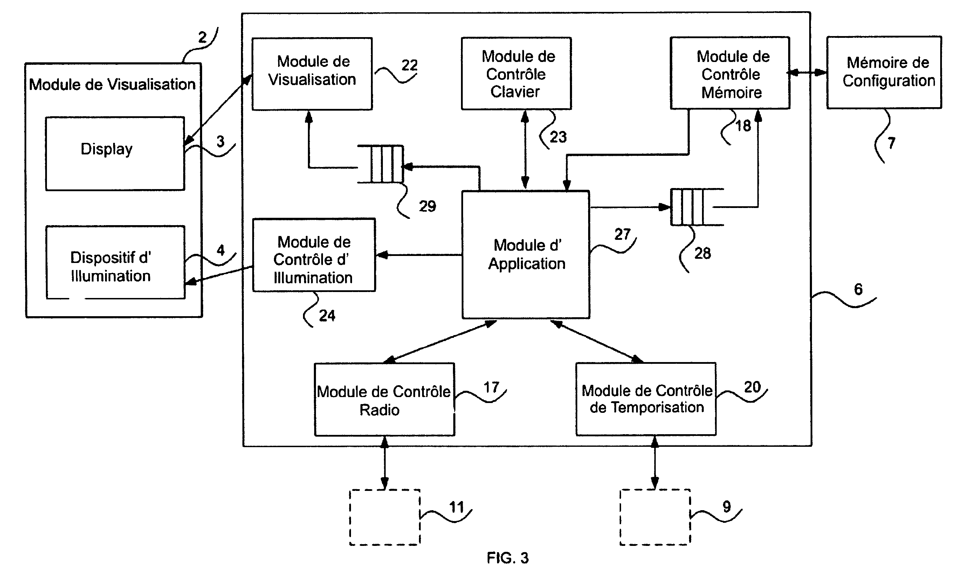

La Figure 3 présente la méthode de Numération et de visualisation sur le display. Au début de cette méthode, un ordre est reçu du module d'application (27), qui a détecté par proximité la commande, et donne l'ordre au module de contrôle de radio (17) d'activer la réception pour recevoir des données de configuration, et fait une demande au module de contrôle de mémoire (18) pour que la configuration de l'illumination et de visualisation lui soit remise. Une fois le contrôle de radio (17) reçu, le module d'application (27) envoie les informations à une queue de données (28). Quand les données commencent à arriver à cette queue (28) de données, le module de contrôle de mémoire (18) commence à les stocker dans la mémoire rémanente. Le module d'application (27) remet la configuration au contrôle d'illumination (24) et ce module de contrôle d'illumination (24) active le dispositif d'illumination (4) avec l'intensité et d'autres caractéristiques définies par les paramètres d'illumination. Le module d'application (27) remet aussi les informations à présenter au module de visualisation (22), à travers les queues de données (29), ces informations sont affichées sur le display (3) par le module de visualisation (22). Le module d'application (27) envoie au module de contrôle de radio (17) les informations qu'il doit envoyer au maître avec la configuration de temps de réponse et de tentatives, en activant la réception pour attendre les données de confirmation du maître (13). Une fois la confirmation du module de contrôle de radio (17) reçue, le module d'application (27) configure le module de contrôle de temporisation (20) et le module d'alimentation (12) pour mettre l'esclave (1) dans des états réguliers de basse consommation. Finalement, il configure le module de contrôle de radio pour écouter régulièrement l'ordre du maître (13).

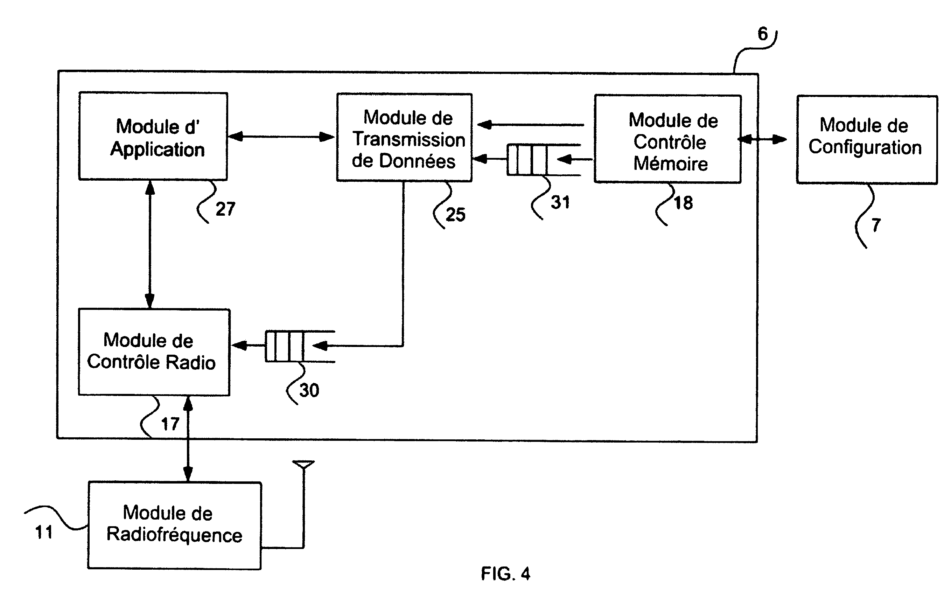

La Figure 4 présente la méthode de transmission de données de l'esclave au maître. Cette méthode commence au moment auquel le module d'application (27) de l'esclave reçoit un ordre d'envoi de données provenant du maître. À ce moment, le module d'application (27) déplace cet ordre au module de transmission de données (25). Une fois l'ordre reçu, le module de tansmission de données (25) demande au module de contrôle de la mémoire rémanente (18) les données correspondantes. Les données sont transférées par le module de contrôle de la mémoire rémanente (18) à une queue (31), de laquelle elles sont extraites par le module de transmission de données (25) pour les envoyer au module de contrôle de radio (17), à travers une autre queue (30).

Des méthodes de réalisation autres que les méthodes représentées sur les Figures 3 et 4 sont envisagées, incluant des queues de données supplémentaires différentes à celles représentées sur ces figures.

Les méthodes de fonctionnement ou procédés compris dans le système selon l'invention sont détaillés ci-dessous.
A) Le système comprend une méthode ou mode inventaire, où ce mode est exécuté par l'esclave et est activé par un ordre externe provenant du maître. Il s'agit de l'état par défaut de l'esclave, d'un mode de basse consommation dans lequel chaque période de temps programmable émet son code identificateur ou ID, et le reste du temps, il reste en mode de basse consommation, ce qui assure une longue durée de vie de la pile. Le module maître connecté à un PC, recueille les codes envoyés par les esclaves qui se trouvent dans le rayon d'action, et les introduit avec la caractéristique de l'état égal à inventaire.
   Dans un exemple de réalisation de cette méthode, au moins un esclave (1) proche de son objet et un module maître (13) qui communique avec l'esclave (1) interviennent, où l'esclave(1) comprend un module d'application (27), un module de transmission de données (25), un module de contrôle de temporisation (20), et une mémoire de configuration (7). La condition qui débute la méthode est un ordre interne provenant du module de contrôle de temporisation (20) de l'esclave (1) et créé à une date et heure précises ou intervalle de temps, de manière à ce que, quand le module d'application (27) détecte la présence de cette condition, les étapes proprement dites de la méthode ont lieu : le module d'application (27) envoie le code d'identification ou ID stocké dans la mémoire de configuration (7) au module de transmission de données (25) pour sa transmission au module maître (13), le module maître (13) traite la donnée et met à jour l'inventaire.
B) Le système comprend une méthode ou mode de localisation spatiale. Ce mode, dans une enceinte et avec un ensemble d'éléments distribués au hasard, permet la localisation spatiale de ceux-ci dans l'enceinte, par rapport à une référence établie. Une fois cette tâche réalisée, il permet, automatiquement, de définir des groupes ou des secteurs et la numération des différents esclaves dans les groupes. Les formes possibles de réalisation sont :
   Mode automatique. En utilisant un ensemble de balise et en établissant leur position préalablement, les esclaves enverront au maître leur distance relative par rapport à chacune des balises, celui-ci attribuant la position spatiale de l'esclave et des autres paramètres comme le groupe, la position, le numéro, etc. Les balises pourront être des éléments spécifiques avec une capacité de transmission par RF et ultrasons ou même les propres esclaves si l'atténuation du signal RF comme mesure de la distance est utilisée.
   Mode Manuel. En utilisant la commande portable, qui présente une capacité de localisation spatiale, par une attribution manuelle des coordonnées, ou avec un GPS, par triangulation basée sur une RF, des infrarouges ou des ultrasons. La localisation spatiale est centralisée dans la commande et celui-ci transmet sans fil les données à l'esclave en l'activant par proximité grâce à l'action d'un champ électromagnétique. Les esclaves enverront au maître leurs coordonnées, et les autres paramètres comme le groupe, la position, le numéro, etc.

   Un exemple de ce mode dans le cas d'utilisation dans du mobilier est celui dénommé numération, décrit ci-dessous..
C) Le système comprend une méthode ou un mode de numération des sièges. Cette méthode est utilisée pour numéroter tous les esclaves d'un local, avec leur file et leur position dans la file correspondante, où l'emplacement des sièges peut être modifié. Ainsi l'esclave visualiesera le numéro de file et la position dans la file pour localiser le siège dans le local. Dans ce mode, le numéro de file et le numéro de siège dans la file sont attribués à l'esclave. Pour cela, le module portable est utilisé, en sélectionnant le numéro de la file. Puis, en rapprochant la commande de l'esclave, le module de procédé de l'esclave détectera la proximité de la commande mobile, et se mettra en écoute pour recevoir les paramètres du numéro de siège, la file et le code de groupe où il est localisé, pour les stocker dans sa configuration. Une fois enregistrés, l'esclave affichera sur son display la file et le numéro et émettra par RF son identificateur, la file et le numéro de siège dans la file selon la période d'émission programmée. Il se met aussi régulièrement en réception dans l'attente d'un message d'acceptation du module maître. Le module maître recevra les informations envoyées par les modules esclaves et ces informations seront stockées dans le PC, le numéro d'inventaire étant associé au numéro de file et le numéro de siège de la file. À ce moment, le module maître enverra un message d'acceptation au module esclave. Le module esclave, en recevant le message de confirmation, arrêtera d'emettre, en passant à un état d'écoute, selon la programmation.
   De cette manière, le module portable enverra à chaque esclave le numéro de file et le numéro de siège de manière consécutive, en informant, par un signal sonore, de l'attribution de chaque esclave. Une fois la file terminée, l'attribution sera acceptée et la file suivante sera traitée.
   Il est aussi possible de réaliser cette configuration depuis le module maître connecté au PC, en sélectionnant dans le logiciel l'esclave et en attribuant une file et un numéro dans celle-ci, l'esclave recevant les mêmes informations et les affichant sur le display, avec le même fonctionnement que le précédent.
   Dans un exemple de réalisation de cette méthode, interviennt un esclave (1) proche de l'objet, un module de commande (14) et un module maître (13) qui communiquent avec l'esclave (1), où l'esclave (1) comprend un module de localisation spatiale (26), un module d'application (27), un module de transmission de données (25), un module de contrôle de temporisation (20), une mémoire de configuration (7), un module de visualisation (2). La condition débutant la méthode peut être un ordre externe provenant du module de commande (14), ou un ordre interne provenant du module de contrôle de temporisation (20) de l'esclave (1) et créé à une certaine date et heure ou intervalle de temps, de manière à ce que, quand le module d'application (27) détecte la présence de cette condition, les étapes proprement dites de la méthode ont lieu : le module d'application (27) envoie le code d'identification ou ID stocké dans la mémoire de configuration (7) au module de transmission de données (25) pour les transmettre au module de commande (14) ; le module de commande (14) traite les données de l'esclave (1) et envoie les informations sur l'emplacement spatial de l'esclave (1) par le lien (15) ; l'esclave (1) recueille les informations relatives à l'emplacement spatial du module de transmission de données (25), l'envoie au module de contrôle de localisation spatiale (26) pour leur traitement ; le résultat du traitement est envoyé au module de localisation (2).
   Dans un autre exemple de réalisation de cette méthode, interviennent au moins un esclave (1) proche de son objet, au moins une balise (16) et un module maître (13) qui communique avec l'esclave (1), où l'esclave (1) comprend un module de localisation spatiale (26), un module d'application (27), un module de transmission de données (25), un module de contrôle de temporisation (20), une mémoire de configuration (7), un module de visualisation (2). La condition débutant la méthode est un ordre externe provenant du module maître (13), de manière à ce que, quand le module d'application (27) détecte la présence de cette condition, les étapes proprement dites de la méthode ont lieu : le module de contrôle de localisation spatiale (26) génère les informations sur la distance relatives à la balise (16) et l'envoie au module d'application (27), le module d'application (27) envoie ces informations avec leur code d'identification ou ID stocké dans la mémoire de configuration (7) au module de transmission de données (25) pour les transmettre au module maître (13), le module maître (13) traite toutes les données de tous les esclaves (1) dans son rayon d'action et envoie par le lien sans fil (15) l'emplacement spatial réel à chaque esclave (1), l'esclave recueille les informations sur l'emplacement spatial du module de transmission de données (25), les envoie au module de contrôle de localisation spatiale (26) pour leur traitement ; le résultat du traitement est envoyé au module de visualisation (2).
D) Le système comprende une méthode ou mode de communication (messagerie).
   Dans un exemple de réalisation de cette méthode, interviennent au moins un esclave (1) proche de son objet, et un module maître (13) qui communique avec l'esclave (1), où l'esclave (1) comprend un module d'application (27), un module de transmission de données (25), un module de contrôle de temporisation (20), une mémoire de configuration (7), un module de visualisation (2). La condition débutant la méthode est un ordre externe de montrer les informations personnalisée provenant du module maître (13) dans lesquelles sont incluses des données de personnalisation, de manière à ce que, quand le module d'application (27) détecte la présence de cette condition, il demande au module de transmission de données (25) les données de personnalisation de l'ordre reçu et le module d'application (27) traite ces données et les envoie au module de visualisation (2).
   Dans un autre exemple de réalisation de cette méthode, interviennent au moins un esclave (1) proche de son objet, et un module maître (13) qui communique avec l'esclave (1), où l'esclave (1) comprend un module d'application (27), un module de transmission de données (25), une mémoire de configuration (7), un module de visualisation (2), un module de contrôle de clavier (23). La condition débutant la méthode est un ordre externe d'obtenir des informations personnalisées provenant du module maître (13), de manière à ce que, quand le module d'application (27) détecte la présence de cette condition, il demande au module de contrôle de clavier (23) les informations recueillies par le clavier, le module d'application (27) traite ces informations et les envoie au module de transmission de données (25) pour les transmettre au module maître (13).
   Dans ce mode, l'esclave peut réaliser différentes tâches dont nous pouvons mentionner :
   Attribution de données personnalisées, par exemple le nom d'utilisateur. Depuis l'application du PC, il est indiqué à chaque module esclave le nom devant apparaître sur le display. Dans ce cas, le module esclave qui est en écoute reçoit les informations et les passe au module de visualisation pour qu'elles soient présentées sur le display et envoie un message de confirmation au maître.

   Messages courts. Depuis l'application du PC, il est possible d'envoyer des messages individuels à chaque esclave ou des messages communs à tous les esclaves. Dans ce cas, le module esclave agit de la même manière que le point précédent.
   Vote. Depuis l'application du PC, un message d'état de vote est envoyé, avec le message devant être présenté à chaque module ou module que l'on désire configurer en mode de vote, de manière à ce que les deux boutons ou claviers de ces modules soient activés. Le module de procédé de l'esclave reçoit l'ordre, active le module de présentation avec le message reçu et active le contrôle du clavier. En gérant le procédé de vote, qui pourra être configuré pour chaque cas. En appuyant sur envoyer à l'esclave, la valeur du vote sera envoyée, et une période de temps configurable s'écoulera, et si le message de confirmation du maître n'est pas reçu, il sera envoyé de nouveau, un nombre de fois configurable. Une fois reçue la confirmation du maître, un message de confirmation sera affiché sur le display.
   Désactivation. Depuis l'application du PC ou depuis la commande portable, un esclave, ou un groupe d'esclaves ou tous les esclaves peuvent être placés en mode basse consommation, ceux-ci éteignant leurs displays et restant en mode de basse consommation. L'esclave, en recevant le message de désactivation, procèdera à désactiver tous les modules et à indiquer au module d'énergie le passage en basse consommation, en entrant en phase d'attente, durant laquelle, il se mettra en écoute régulièrement en attente du message du maître pour son activation et passage en mode communication ou passage en mode inventaire.
   Inventaire. Depuis l'application du PC ou depuis la commande portable, un esclave, ou un groupe d'esclaves ou tous les esclaves peuvent être placés en mode inventaire. Les esclaves resteront en mode basse consommation. Les esclaves passant à l'état Inventaire. L'esclave, en recevant le message d'inventaire, émettra régulièrement, selon la configuration, son code d'identification.
E) Le système comprend une méthode d'activation/désactivation de l'esclave dont l'objectif est de réduire la consommation d'énergie en maintenant l'esclave désactivé ou éteint presque tout le temps, et uniquement activé régulièrement durant un intervalle de temps configurable. Durant cette période de temps, l'esclave consulte s'il y a une demande d'un maître proche pour la réalisation d'une opération. L'activation et la désactivation de l'esclave sont contrôlées par le module temporisateur.
   Dans un exemple de réalisation de cette méthode, interviennent au moins un esclave (1) proche de son objet, où l'esclave (1) comprend un module d'application (27), un module temporisateur (9) alimenté en permanence et un dispositif programmable (8) en général non alimenté. La condition débutant la méthode est un ordre interne de type déterminé provenant du module temporisateur (9), générée à des dates, heures ou intervalles de temps configurables depuis le maître (13), de manière à ce que, quand l'esclave (1) détecte la présence de cette condition, les étapes proprement dites de la méthode ont lieu : le module temporisateur (9) active le module d'application (27) et l'informe du type déterminé d'ordre interne, le module d'application (27) réalise une sous-méthode correspondante au type déterminé d'ordre interne, et, à la fin de cette sous-méthode, le module d'application (27) donne l'ordre d'arrêter l'esclave (1).
   Le type déterminé d'ordre interne peut être un ordre interne de passage en mode d'écoute ou en mode durant lequel l'esclave reste allumé et au repos pendant une période de temps configurable, en attente d'une communication provenant du maître (13) ou peut être un ordre interne de passage en mode inventaire ou en mode durant lequel l'esclave (1) reste allumé et le module d'application (27) envoie le code d'identification ou ID stocké dans la mémoire de configuration (7) au module de transmission de données (25) pour leur transmission au module maître (13), le module maître (13) traite la donnée et met à jour l'inventaire.
   Dans un autre exemple de réalisation de cette méthode, interviennent au moins un esclave (1) proche de son objet, et un module maître (13) communiquant avec l'esclave (1), où l'esclave (1) comprend un module d'application (27), un module de transmission de données (25). La condition débutant la méthode est un ordre externe de passer en mode balise provenant du module maître (13) dans lequel sont incluses des données d'information du mode balise, de manière à ce que, quand le module d'application (27) détecte la présence de cette condition, il demande au module de transmission de données (25) de transmettre les données de l'ordre reçu.
F) Le système comprend une méthode de reconfiguration à distance, pour la reconfiguration totale ou partielle du fonctionnement de l'esclave, où cette méthode débute par un ordre de reconfiguration envoyé par le maître incluant les nouvelles données de reconfiguration.
   Dans un exemple de réalisation de cette méthode, interviennent au moins un esclave (1) proche de son objet, et un module maître (13) qui communique avec l'esclave (1), où l'esclave (1) comprend un module d'application (27), un module de reconfiguration (19), un module de transmission de données (25), une mémoire de configuration (7). La condition débutant la méthode est un ordre externe provenant du module maître (13) dans lequel sont incluses des données de reconfiguration, de manière à ce que, quand le module d'application (27) détecte la présence de cette condition, les étapes proprement dites de la méthode ont lieu : le module d'application (27) extrait les données de reconfiguration de l'ordre externe et les stocke dans la mémoire de configuration (7), et où, une fois stockées les données de reconfiguration dans la mémoire de configuration (7), l'esclave (1) procède à se reconfigurer.
G) Le système comprend une méthode de modification à distance des valeurs stockées dans la mémoire, pour la reconfiguration partielle des valeurs stockées dans l'esclave. Cette méthode débute par un ordre de consultation ou de modification envoyé par le maître dans lequel les nouvelles données de configuration, le cas échéant, sont incluses.
   Dans le but de permettre que le maître et l'esclave exécutent les méthodes citées ou d'autres actions telles que la modification des paramètres configurables de l'esclave, le protocole bidirectionnnel de comunication entre le maître et l'esclave supporte une série de messages ou ordres. Quant à la communication dans le sens maître-esclave, ce protocole bidirectionnel comprend une série d'ordres que le maître est capable d'envoyer à l'esclave, comme :
   - une écriture ou modification des paramètres configurables de l'esclave,
   - une lecture ou consultation des paramètres configurables de l'esclave,
   - une réception d'une nouvelle configuration du système,
   - un envoi de la version de la configuration actuelle,
   - une inicialisation des modules de l'esclave,
   - un passage au mode désactivé de l'esclave,
   - un passage au mode activation,
   - un envoi de confirmation.

   La méthode de reconfiguration à distance, pour la reconfiguration totale ou partielle du fonctionnement de l'esclave, commence quand le module d'application (27) de l'esclave reçoit du maître l'ordre de reconfiguration. À ce moment, le module d'application (27) envoie cet ordre au module de contrôle de reconfiguration (19), qui reccueille les données de reconfiguration d'une queue du module de contrôle radio (17) et les envoie au module de contrôle de mémoire (18) pour les stocker dans la mémoire de configuration (8) du module de procédé. Quand toutes les données de reconfiguration ont été reçues, le module de contrôl,e de reconfiguration (19) reconfigure le système.
   La méthode d'activation/désactivation de l'esclave commence quand le module d'alimentation (12), alimenté en permanence, détecte que l'esclave doit entrer dans un intervalle de temps d'activation, et, par conséquent, il active le module de procédé (6). Quand ceci arrive, le module de contrôle de temporisation (20) demande au module d'alimentation (12) le motif de l'activation.
   Si la raison de l'activation est une mise en mode écoute, le module de radiofréquence (11) est activé et passe en mode écoute. Si après une certaine période d'écoute, configurable de préférence, aucun message n'a été reçu d'un maître, l'esclave est désactivé jusqu'à un nouvel évènement. Si, au contraire, durant l'intervalle de temps un message ou ordre du maître est reçu, l'esclave répond à ce message correctement et selon la méthode correspondante. À la fin de l'une des actions, l'esclave est désactivé de nouveau.

## Revendications

1. Système de localisation spatiale sans fil pour la numération, la commande et la gestion à distance de l'inventaire d'objets, avec des fonctionnalités supplémentaires de messagerie, d'identification et de renumération; **caractérisé par le fait que** :
a) il comprend, au moins, un élément localisateur ou esclave (1) situé sur l'objet ; un élément contrôleur ou maître (13) qui communique avec l'esclave (1) à travers un premier lien (15); un module mobile ou commande (14) qui communique avec l'esclave (1) à travers un second lien (15); et un ensemble de balises (16) qui communiquent avec l'esclave (1) à travers un troisième lien (15)
b) l'esclave (1) comprend un module de localisation spatiale (10) capable d'obtenir la localisation spatiale de l'objet ; un module de procédé (6) capable de traiter les informations de localisation et de les afficher sur un module de visualisation (2); un module de radiofréquence (11) ; un module de gestion de l'alimentation électrique (12) ; et un module de gestion de clavier (5)
c) l'esclave (1) stocke et gère des paramètres configurables qui configurent son fonctionnement, et qui peuvent être modifiés ou consultés par l'élément maître (13) à travers le premier lien mentionné (15).

2. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** le module de visualisation (2) comprend au moins un élément électronique de visualisation des informations ou display (3) chargé de montrer les informations de localisation spatiale de l'esclave (1) et un dispositif d'illumination (4) réglable ou configurable selon des paramètres d'illumination configurables stockés dans l'esclave (1).

3. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** le module de procédé (6) comprend au moins un dispositif programmable (8), au moins une mémoire de configuration (7) et au moins un module temporisateur (9).

4. Système de localisation spatiale sans fil pour la numération, la commande et la gestion à distance de l'inventaire d'objets, avec des fonctionnalités supplémentaires de messagerie, d'identification et de renumération, selon la revendication 3; **caractérisé par le fait que** le dispositif programmable (8) est un processeur et la mémoire de configuration (7) est une mémoire rémanente qui stocke les instructions devant être exécutées par le processeur, les paramètres configurables régissant le fonctionnement de l'esclave (1).

5. Système de localisation spatiale sans fil pour la numération, la commande et la gestion à distance de l'inventaire d'objets, avec des fonctionnalités supplémentaires de messagerie, d'identification et de renumération, selon la revendication 3; **caractérisé par le fait que** le dispositif programmable (8) est un dispositif de logique reconfigurable et la mémoire de configuration (7) est une mémoire rémanente où sont stockés les paramètres configurables qui régissent le fonctionnement de l'esclave (1) et au moins une configuration complète ou représentation de l'architecture et de la fonctionnalité comprise dans le dispositif programmable.

6. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** le lien (15) est une connexion sans fil ad-hoc ou une connexion radio privée standard.

7. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** le lien (15) est une connexion sans fil publique de type cellulaire ou semblable.

8. Système de localisation spatiale sans fil pour la numération, la commande et la gestion à distance de l'inventaire d'objets, avec des fonctionnalités supplémentaires de messagerie, d'identification et de renumération, selon les revendications 1, 6 et 7 **caractérisé par le fait que** l'esclave (1) communique par le lien sans fil (15) avec le module maître (13) en utilisant un protocole de communications conventionnel.

9. Système de localisation spatiale sans fil pour la numération, la commande et la gestion à distance de l'inventaire d'objets, avec des fonctionnalités supplémentaires de messagerie, d'identification et de renumération, selon la revendication 8; **caractérisé par le fait que** le protocole de communications comprend au moins une commande ou un ensemble de commandes permettant de modifier depuis le maître (13) les paramètres configurables de l'esclave (1), l'inicialisation de l'esclave, l'activation ou la désactivation de l'esclave.

10. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** le module de localisation spatiale (10) est un module de réception/transmission par ultrasons.

11. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** le module de localisation spatiale (10) est un module de réception/transmission par radiofréquence.

12. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** le module de localisation spatiale (19) est un module de réception/transmission par radiation lumineuse.

13. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** les paramètres configurables qui configurent le fonctionnement de l'esclave (1) comprennent au moins un des paramètres de l'ensemble formé par au moins un code d'identification d'esclave (1) ou ID, au moins un paramètre en relation avec le module d'alimentation temporisateur (9) et des paramètres d'illumination du module de visualisation (2).

14. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** le dispositif programmable (8) présente une configuration par défaut de son fonctionnement selon laquelle l'architecture du dispositif programmable (8) comprend un module d'application (27) chargé de contrôler et de prendre des décisions quant aux tâches de plus haut niveau ; un module de contrôle de la reconfiguration (19), qui s'assure de contrôler la transmission correcte des données de la reconfiguration et une reconfiguration correcte; un module de contrôle de visualisation (22), qui gère le fonctionnement du dispositif display (3); un module de contrôle d'illumination (24), chargé de gérer le dispositif d'illumunation (4) ; un module de contrôle mémoire (18), qui gère l'accès à la mémoire de configuration (7); un module de contrôle clavier (3) ; un module de queues de communication (21), comprenant au moins une queue (28, 29, 30, 31) de stockage de données de l'esclave (1) ; un module de transmission de données (25) et un module de contrôle radio (17), qui implantent le protocole bidirectionnel de communications maître-esclave et gèrent le fonctionnement du module de radiofréquence (11) ; un module de contrôle de localisation spatiale (26), qui gère les informations et la configuration du module de localisation spatiale (10).

15. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** la balise (16) est un élément ad-hoc avec des possibilités de communication sans fil.

16. Système de localisation spatiale sans fil pour la numération, la commande et la gestion à distance de l'inventaire d'objets, avec des fonctionnalités supplémentaires de messagerie, d'identification et de renumération, selon la revendication 1; **caractérisé par le fait que** la balise (16) est un esclave (1).

17. Système de localisation spatiale sans fil pour la numération, la commande et la gestion à distance de l'inventaire d'objets, avec des fonctionnalités supplémentaires de messagerie, d'identification et de renumération ; **caractérisé par le fait que** :
a) dans cette méthode interviennent un esclave (1) proche de l'objet, un module de commande (14) ou, au moins, un balise (16) et un module maître (13) qui communiquent avec l'esclave (1), où l'esclave (1) comprend un module de localisation spatiale (26), un module d'application (27), un module de transmission de données (25), un module de contrôle de temporisation (20), une mémoire de configuration (7), un module de visualisation (2) ;
b) la condition débutant la méthode est :
b₁) ou un ordre externe provenant du module de commande (14), ou un ordre interne provenant du module de contrôle de temporisation (20) de l'esclave (1) et généré à une certaine date et heure ou intervalle de temps, de manière à ce que, quand le module d'application (27) détecte la présence de cette condition, les étapes proprement dites de la méthode ont lieu : le module d'application (27) envoie le code d'identification ou ID stocké dans la mémoire de configuration (7) au module de transmission de données (25) pour le transmettre au module de commande (14); le module de commande (14) traite les données de l'esclave (1) et envoie les informations d'emplacement spatial à l'esclave (1) par un lien (15); l'esclave (1) recueille les information de l'emplacement spatial du module de transmission de données (25), l'envoie au module de contrôle de localisation spatiale (26) pour qu'elles soient traitées; le résultat du traitement est envoyé au module de visualisation (2);
b₂) ou un ordre externe provenant du module maître (13), de manière à ce que, quand le module d'application (27) détecte la présence de cette condition, les étapes proprement dites de la méthode ont lieu : le module de contrôle de localisation spatiale (26) génère les informations sur la distance relatives à la balise (16) et l'envoie au module d'application (27), le module d'application (27) envoie ces informations avec leur code d'identification ou ID stocké dans la mémoire de configuration (7) au module de transmission de données (25) pour leur transmission au module maître (13), le module maître (13) traite toutes les données de tous les esclaves (1) dans son rayon de portée et envoie par un lien sans fil (15) l'emplacement spatiale réel à chaque esclave (1), l'esclave (1) recueille les informations de l'emplacement spatial du module de transmission de données (25), l'envoie au module de contrôle de localisation spatiale (26) pour leur traitement ; le résultat du traitement est envoyé au module de visualisation (2).

18. Système de localisation spatiale sans fil pour la numération, la commande et la gestion à distance de l'inventaire d'objets, avec des fonctionnalités supplémentaires de messagerie, d'identification et de renumération, selon la revendication 17, **caractérisé par le fait que** le calcul de la distance relative de l'esclave (1) à au moins une balise (16) est réalisé par ultrasons, en analysant les différences de temps entre les arrivées des signaux ultrasoniques par rapport à un signal de référence.

19. Système de localisation spatiale sans fil pour la numération, la commande et la gestion à distance de l'inventaire d'objets, avec des fonctionnalités supplémentaires de messagerie, d'identification et de renumération, selon la revendication 17, **caractérisé par le fait que** le calcul de la distance relative de l'esclave (1) à au moins une balise (16) est réalisé par radiofréquence, en analysant les intensités du signal de radiofréquence par rapport à un signal de référence.

20. Système de localisation spatiale sans fil pour la numération, la commande et la gestion à distance de l'inventaire d'objets, avec des fonctionnalités supplémentaires de messagerie, d'identification et de renumération, selon la revendication 17, **caractérisé par le fait que** le calcul de la distance relative de l'esclave (1) à au moins une balise (16) est réalisé par rayonnement lumineux, en analysant les intensités du signal de rayonnement lumineux.

21. Méthode de commande et de gestion à distance d'inventaire d'objets, **caractérisé par le fait que** :
a) dans cette méthode interviennent au moins un esclave (1) proche de son objet et un module maître (13) qui communique avec l'esclave (1), où l'esclave (1) comprend un module d'application (27), un module de transmission de données (25), un module de contrôle de temporisation (20), une mémoire de configuration (7) ;
b) la condition débutant la méthode est qu'un ordre interne provenant du module de contrôle de temporisation (20) de l'esclave (1) et généré à une certaine date et heure ou intervalle de temps, de manière à ce que, quand le module d'application (27) détecte la présence de cette condition, les étapes proprement dites de la méthode ont lieu : le module d'application (27) envoie le code d'identification ou ID stocké dans la mémoire de configuration (7) au module de transmission de données (25) pour le transmettre au module maître (13), le module maître (13) traite la donnée et met à jour l'inventaire.

22. Méthode de gestion de messagerie **caractérisée par le fait que** :
a) dans cette méthode intervient au moins un esclave (1) proche de son objet et un module maître (13) qui communique avec l'esclave (1), où l'esclave (1) comprend un module d'application (27), un module de transmission de données (25), un module de contrôle de temporisation (20), une mémoire de configuration (7), un module de visualisation (2) et un module de contrôle clavier (23) ;
b) la condition débutant la méthode est :
b₁) ou un ordre externe de montrer des informations personnalisées provenant du module maître (13) dans lequel sont incluses des données de personnalisation, de manière à ce que, quand le module d'application (27) détecte la présence de cette condition, il demande au module de transmission de données (25) les données de personnalisation de l'ordre reçu et le module d'appliation (27) traite ces données et les envoie au module de visualisation (2) ;
b₂) ou bien un ordre externe d'obtenir les informations personnalisées provenant du module maître (13), de manière à ce que, quand le module d'application (27) détecte la présence de cette condition, il demande au module de contrôle clavier (23) les informations reçues par le clavier, le module d'application (27) traite ces informations et les envoie au module de transmission de données (25) pour leur transmission au module maître (13).

23. Méthode de reconfiguration à distance du système de localisation spatiale sans fil pour la numération, la commande et la gestion à distance de l'inventaire d'objets, avec des fonctionnalités supplémentaires de messagerie, d'identification et de renumération **caractérisé par le fait que** :
a) dans cette méthode interviennent au moins un esclave (1) proche de son objet, un module maître (13) qui communique avec l'esclave (1), où l'esclave (1) comprend un module d'application (27), un module de reconfiguration (19), un module de transmission de données (25), une mémoire de configuration (7);
b) la condition débutant la méthode est un ordre externe provenant du module maître (13) dans lequel sont incluses des données de reconfiguration, de manière à ce que, quand le module d'application (27) détecte la présence de cette condition, les étapes proprement dites de la méthode ont lieu : le module d'application (27) extrait les données de reconfiguration de l'ordre externe et les stocke dans la mémoire de configuration (7), et où, une fois le stockage des données de reconfiguration dans la mémoire de configuration (7) terminé, l'esclave (1) procède à se reconfigurer.

24. Méthode d'activation et de désactivation d'un esclave d'un système de localisation spatiale sans fil pour la numération, la commande et la gestion à distance de l'inventaire d'objets, avec des fonctionnalités supplémentaires de messagerie, d'identification et de renumération **caractérisé par le fait que**:
a) dans cette méthode interviennent au moins un esclave (1) proche de son objet, où l'esclave (1) comprend un module d'application (27), un module de temporisateur (9) alimenté en permanence et un dispositif programmable (8) en général non alimenté ;
b) la condition débutant la méthode est un ordre interne d'un type déterminé provenant du module temporisateur (9), généré à des dates et heures ou intervalles de temps configurables depuis le maître (13), de manière à ce que, quand l'esclave (1) détecte la présence de cette condition, les étapes proprement dites de la méthode ont lieu : le module temporisateur (9) active le module d'application (27) et l'informe de cet ordre interne, le module d'application (27) réalise une sous-méthode correspondante au type déterminé d'ordre interne, et, à la fin de cette sous-méthode, le module d'application (27) ordonne que l'esclave (1) s'éteigne.

25. Méthode d'activation et de désactivation d'un esclave d'un système de localisation spatiale sans fil pour la numération, la commande et la gestion à distance de l'inventaire d'objets, avec des fonctionnalités supplémentaires de messagerie, d'identification et de renumération, selon la revendication 24, **caractérisé par le fait que** le type déterminé d'ordre interne est un ordre interne de passage en mode écoute ou en mode dans lequel l'esclave reste allumé et au repos pendant une période de temps configurable, en attente d'une communication provenant du maître (13).

26. Méthode d'activation et de désactivation d'un esclave d'un système de localisation spatiale sans fil pour la numération, la commande et la gestion à distance de l'inventaire d'objets, avec des fonctionnalités supplémentaires de messagerie, d'identification et de renumération, selon la revendication 24, **caractérisé par le fait que** le type déterminé d'ordre interne est un ordre interne de passage en mode inventaire ou mode dans lequel l'esclave (1) reste allumé et le module d'application (27) envoie le code d'identification ou ID stocké dans la mémoire de configuration (7) au module de transmission de données (25) pour leur transmission au module maître (13), le module maître (13) traite la donnée et met à jour l'inventaire.

27. Méthode de fonctionnement en mode balise d'un esclave **caractérisé par le fait que** :
a) dans cette méthode interviennent au moins un esclave (1) proche de son objet et un module maître (13) qui communique avec l'esclave (1), où l'esclave (1) comprend un module d'application (27), un module de transmission de données (25) ;
b) la condition débutant la méthode est un ordre externe de passer en mode balise provenant du module maître (13) dans lequel sont incluses des données d'information du mode balise, de manière à ce que, quand le module d'application (27) détecte la présence de cette condition, il demande au module de transmission de données (25) de transmettre les données de l'ordre reçu.
